# EUROPEAN PATENT APPLICATION

(11) **EP 0 823 742 A1**
(43) Date of publication of application: **11.02.1998**
(21) Application number: 96810525.4
(22) Date of filing: 08.08.1996
(51) Int. Cl.: H01M 8/04, H01M 8/10

(54) **Plant for the simultaneous production of electric and thermal energy**

(71) Applicant: SULZER INNOTEC AG, CH-8401 Winterthur (CH)
(72) Inventor: Brun, Joseph, Dr., 8400 Winterthur (CH); Lenel, Daniel, 8344 Bäretswil (CH)
(74) Representative: Heubeck, Bernhard

(57) **Zusammenfassung**

Die Anlage zur simultanen Erzeugung von elektrischer und thermischer Energie aus einem Brenngas, insbesondere Erdgas, umfasst eine Batterie (1) von Hochtemperaturbrennstoffzellen, eine Wärmekraftmaschine (2) und mindestens eine zweite, durch die Wärmekraftmaschine antreibbare Maschine (3). Ein Abwärme-Austauscher (21), insbesondere ein Verdampfer, ist an eine Abgasaustrittstelle (14) der Batterie angeschlossen. Dieser Abwärme-Austauscher ist als Wärmequelle für die Wärmekraftmaschine vorgesehen. Die zweite Maschine ist eine Wärmepumpe oder ein elektrischer Generator.

## Description

Die Erfindung betrifft eine Anlage zur simultanen Erzeugung von elektrischer und thermischer Energie.

Es ist bekannt, dass mit Brennstoffzellen, insbesondere Hochtemperaturzellen des SOFC-Typs ("Solid Oxid Fuel Cell"-Typ), eine Reduzierung des Primärenergieverbrauchs bei der Nutzung von Erdgas möglich ist. Mit SOFC-Zellen kann die Primärenergie bis zur Hälfte als elektrische Energie zur Verfügung gestellt werden, die andere Hälfte weitgehend als thermische Energie zu Heizzwecken. In der Regel besteht ein Bedarf an elektrischer und thermischer Energie mit variablen Anteilen. Das Erfordernis, den Primärenergieverbrauch zu reduzieren, verbietet es einerseits, die elektrische Energie direkt in thermische umzuwandeln. Übersteigt der Bedarf an elektrischer Energie jenen an thermischer, so ist andererseits aufgrund des gleichen Erfordernisses dafür zu sorgen, dass die im Überschuss vorliegende Wärmeenergie nicht ungenutzt an die Umgebung abgegeben wird.

Es ist Aufgabe der Erfindung, eine Anlage zu schaffen, die eine möglichst gute Nutzung eines Brenngases, insbesondere von Erdgas, hinsichtlich des genannten Erfordernisses ermöglicht. Diese Aufgabe wird durch die in den Ansprüchen 1, 7 und 8 definierten Anlagen gelöst. Die abhängigen Ansprüche 2 bis 6 beziehen sich auf vorteilhafte Ausführungsformen der erfindungsgemässen Anlage. Der Anspruch 9 betrifft erfindungsgemässe Anlagen mit einem besonderen Typ von Brennstoffzellen.

Die Luftüberschusszahl (= Verhältnis von Menge an zugeführter Luft zu Luftmenge, die gemäss Stöchiometrie für die Verbrennung des Brenngases benötigt würde) bekannter SOFC-Brennstoffzellen liegen im einem Bereich von rund 5 bis 20. Die Abgastemperatur liegt je nach Luftüberschusszahl zwischen 100 und 300°C. Diese Temperatur ist somit bis zu 240°C grösser als eine Heiztemperatur von 60°C ist. Das Gefälle zwischen Abgas- und Heiztemperatur wird erfindungsgemäss für die Stromerzeugung beispielsweise in einem Dampfturbinenprozess oder für die Wärmetransformation in einem Wärmepumpen- bzw. Kälteprozess genutzt. Bei diesen Prozessen wird die Exergie des Abgases in eine Arbeitsleistung umgesetzt.

Je kleiner die Luftüberschusszahl ist, desto höher liegt die Abgastemperatur und desto grösser ist die Exergie des Abgases. Hinsichtlich der gestellten Aufgabe soll daher die Luftüberschusszahl möglichst klein sein. Für eine aus der EP-A 0 654 838 (= P.6612) bekannten Brennstoffzellenbatterie, die einen zentralsymmetrischen Zellenstapel umfasst und in der Brenngas und vorgewärmte Luft in den Zellen radial und im Gleichstrom vom Zentrum zur Peripherie strömen, genügt eine relativ kleine Luftüberschusszahl, nämlich rund 5. Es ist möglich, dass für eine derartige Batterie die Luftüberschusszahl noch weiter reduziert - bis auf 3 oder tiefer - werden kann. Für die erfindungsgemässe Anlage sollten daher Brennstoffzellen des genannten zentralsymmetrischen Typs verwendet werden, um den Verbrauch an Primärenergie möglichst gering halten zu können.

Nachfolgend wird die Erfindung anhand der Zeichnungen erläutert. Es zeigen:
- Fig. 1: eine erfindungsgemässe, schematisch dargestellte Anlage mit SOFC-Brennstoffzellen und mit einer Wärmekraftmaschine, die eine Expansionsmaschine umfasst,
- Fig. 2: eine besondere Anlage gemäss Fig.1, in der die Wärmekraftmaschine eine Wärmepumpe antreibt,
- Fig. 3: eine Anlage wie in Fig.2, die einen zusätzlichen Elektroantrieb umfasst,
- Fig. 4: eine erfindungsgemässe Anlage mit einer Dampfstrahlanlage und
- Fig. 5: eine erfindungsgemässe Anlage mit einer Sorptionsanlage.

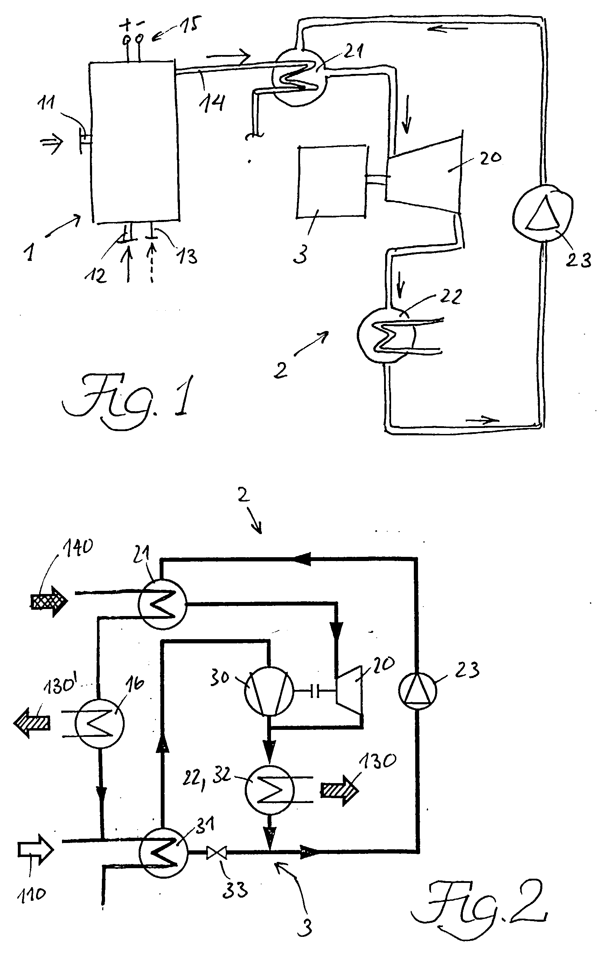

Die Anlage in Fig.1 weist folgende Komponenten auf: Eine Brennstoffzellenbatterie mit einem Anschluss 11 für Luft, einem Anschluss 12 für ein Brenngas, einem Anschluss 13 für Wasser (für eine Reformierung des Gases), einer Ausgangsstelle 14 für Abgas und zwei Polen 15 für die Abgabe von erzeugter elektrischer Energie; ferner eine Wärmekraftmaschine 2 und eine zweite, durch die Wärmekraftmaschine 2 antreibbare Maschine 3. Die Wärmekraftmaschine 2 umfasst eine Expansionsmaschine 20, insbesondere eine Dampfturbine, einen Abwärme-Austauscher 21, insbesondere einen Verdampfer für ein Arbeitsmittel, wobei das heisse Abgas der Batterie 1 die Wärmequelle bildet, einen Verflüssiger 22 und eine Druckerhöhungspumpe 23. Die zweite Maschine 3 kann beispielsweise ein elektrischer Generator sein oder eine Wärmepumpe.

Fig.2 stellt das zweite Beispiel dar, bei dem eine Wärmepumpe 3 durch die Expansionsmaschine 20 angetrieben ist. Diese Wärmepumpe 3 bildet mit der Wärmekraftmaschine 2 ein kommunizierendes System mit einem einzigen Arbeitsmittel; sie umfasst folgende Komponenten: Einen Verdichter 30, der an die Expansionsmaschine 20 angekoppelt ist; einen Verflüssiger 32, der gleichzeitig ein Verflüssiger 22 der Wärmekraftmaschine 2 ist; ein Expansionsventil 33; und einen Verdampfer 31. Mit besonders markierten Pfeilen 110, 130 und 140 sind Wärmeströme dargestellt, nämlich der Wärmezustrom 140 des heissen Abgases, ein Wärmezustrom 110 aus der Umgebung und der durch die Wärmepumpe 3 bereitgestellte Wärmestrom 130, der für die Raumheizung und/oder für die Brauchwasser-Erwärmung genutzt werden kann.

Die Abgaswärme kann kaskadenartig genutzt werden: Das im Wärmetauscher 21 abgekühlte Abgas wird in einem nachfolgenden Wärmetauscher 16 auch noch direkt für Raumheizung und/oder Brauchwasser-Erwärmung genutzt (Pfeil 130'). Das weiter abgekühlte Abgas wird schliesslich noch in dem Verdampfer 31 als Wärmequelle verwendet.

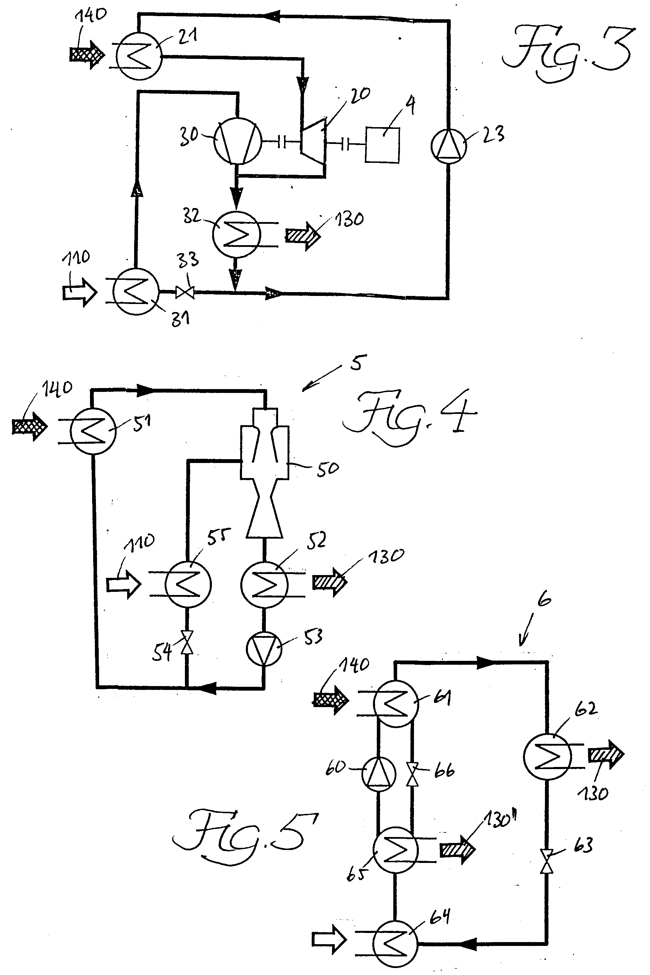

Die Wärmepumpe 3 lässt sich während der warmen Jahreszeit als Kältemaschine 3 verwenden. Dabei stellt der Pfeil 110 den Strom der Wärme dar, die dem zu kühlenden Medium - beispielsweise Raumluft - entzogen wird. Der Pfeil 130 entspricht der Abwärme, die an die Umgebung abgegeben wird. Bei den nachfolgenden, in den Figuren 3 bis 5 gezeigten Beispielen haben die Pfeile 110, 130 und 140 jeweils die gleiche Bedeutung wie im Fall der Wärmepumpe 3 bzw. Kältemaschine 3 der Fig.2.

Die Anlage der Fig.2 kann - siehe Fig.3 - zusätzlich einen elektrischen Generator 4 enthalten, so dass die Expansionsmaschine 20 wahlweise an den Verdichter 30 oder an den Generator 4 ankuppelbar ist. Der Verdichter 30 kann zusätzlich durch einen Elektromotor angetrieben sein. Dabei dient mit Vorteil die Batterie 1 als Energiequelle des Elektromotors 4.

Die Wärmekraftmaschine 2 und die zweite Maschine 3 können durch eine Maschine ersetzt werden, mit der thermische Energie des heissen Abgases in Heizwärme oder Kälte umwandelbar ist. An die Stelle der aus Dampfturbine 20 und Verdichter 30 gebildeten Turbogruppe tritt dabei eine Dampfstrahlanlage 5 (Fig.4) oder eine Sorptionsanlage 6 (Fig.5).

Die Dampfstrahlanlage 5 der Fig.4 umfasst folgende Komponenten: Strahlpumpe 50, erster Verdampfer 51 (Verdampfung bei Abgastemperatur), Verflüssiger 52, Druckerhöhungspumpe 53, Expansionsventil 54 und zweiter Verdampfer 55 (Verdampfung bei Aussenluft- bzw. Raumlufttemperatur). In dem ersten Verdampfer 51 wird Treibdampf für die Strahlpumpe 50 erzeugt. Die Druckabsenkung in der Saugdüse der Strahlpumpe bewirkt eine Verdampfung und Wärmeaufnahme im zweiten Verdampfer 55.

Die Dampfstrahlanlage 5 weist einen relativ geringen Wirkungsgrad auf, stellt aber eine preiswerte Lösung dar.

Die Sorptionsanlage 6 der Fig.5 umfasst folgende Komponenten: Lösungspumpe 60, Austreiber 61, Verflüssiger 62, erstes Expansionsventil 63, Verdampfer 64, Absorber 65 und zweites Expansionsventil 66. Der Pfeil 130'' stellt wie der Pfeil 130 einen Strom von Abwärme bzw. Nutzwärme dar. Im Austreiber 61 wird aus der unter Druck stehenden Lösung eine leichtflüchtige Komponente unter Wärmeaufnahme ausgetrieben und unter Wärmeabgabe im Verflüssiger 62 kondensiert. Die im Austreiber 61 anfallende magere Lösung wird in den Absorber 65 zugeleitet, wo die aus dem Verdampfer 64 kommende leichtflüchtige Komponente durch die Lösung absorbiert wird.

In den Anlagen der Figuren 3 bis 5 kann die Abwärme der Batterie gleich wie in der Anlage der Fig.2 kaskadenartig in drei aufeinander folgenden Wärmetauschern genutzt werden. Der dritte dieser Wärmetauscher ist jeweils der Verdampfer 31, 55 bzw. 64. Die dem Wärmetauscher 16 (Fig.2) entsprechenden Wärmetauscher sind nicht dargestellt.

## Patentansprüche

1. Anlage zur simultanen Erzeugung von elektrischer und thermischer Energie aus einem Brenngas, insbesondere Erdgas, welche Anlage eine Batterie (1) von Hochtemperaturbrennstoffzellen, eine Wärmekraftmaschine (2) und mindestens eine zweite, durch die Wärmekraftmaschine antreibbare Maschine (3) umfasst, wobei ein Abwärme-Austauscher (21), insbesondere ein Verdampfer, an eine Abgasaustrittstelle (14) der Batterie angeschlossen ist, dieser Abwärme-Austauscher als Wärmequelle für die Wärmekraftmaschine vorgesehen ist und die zweite Maschine eine Wärmepumpe oder ein elektrischer Generator ist.

2. Anlage nach Anspruch 1, dadurch gekennzeichnet, dass, an den Abwärme-Austauscher (21) ein Wärmetauscher (16) angeschlossen ist, durch den das in dem Abwärme-Austauscher abgekühlte Abgas als Heizwärme (130') für eine Raumheizung und/oder eine Brauchwassererwärmung nutzbar ist.

3. Anlage nach Anspruch 1 oder 2, dadurch gekennzeichnet, dass die Wärmekraftmaschine (2) ein als Dampf sowie Flüssigkeit vorliegendes Arbeitsmittel, eine Expansionsmaschine (20), insbesondere eine Dampfturbine für das dampfförmige Arbeitsmittel enthält und mindestens einen Verdampfer (21) sowie Verflüssiger (22) für das Arbeitsmittel umfasst und ferner eine Druckerhöhungspume (23) für das flüssige Arbeitsmittel umfasst, wobei die Expansionsmaschine in Wirkverbindung mit der zweiten Maschine (3) steht.

4. Anlage nach Anspruch 3, dadurch gekennzeichnet, dass die zweite Maschine (3) eine Wärmepumpe ist, die mit der Wärmekraftmaschine (2) ein kommunizierendes System mit einem einzigen Arbeitsmittel bildet und dass ein Verdichter (30) der Wärmepumpe durch die Expansionsmaschine (20) antreibbar ist.

5. Anlage nach Anspruch 4, dadurch gekennzeichnet, dass die Expansionsmaschine (20) wahlweise an einen elektrischen Generator (4) oder an den Verdichter (30) ankuppelbar ist.

6. Anlage nach Anspruch 4, dadurch gekennzeichnet, dass der Verdichter (30) zusätzlich durch einen Elektromotor (4) antreibbar ist, wobei die Batterie (1) als Energiequelle des Elektromotors dient.

7. Anlage nach Anspruch 1 oder 2, in der die Wärmekraftmaschine (2) und die zweite Maschine (3) durch eine Dampfstrahlanlage (5) ersetzt sind, die durch thermische Energie des heissen Abgases antreibbar ist und mit der Heizwärme oder Kälte erzeugbar ist.

8. Anlage nach Anspruch 1 oder 2, in der die Wärmekraftmaschine (2) und die zweite Maschine (3) durch eine Sorptionsanlage (6) ersetzt sind, die durch thermische Energie des heissen Abgases antreibbar ist und mit der Heizwärme oder Kälte erzeugbar ist.

9. Anlage nach einem der Ansprüche 1 bis 8, dadurch gekennzeichnet, dass die Batterie einen Stapel von zentralsymmetrischen Brennstoffzellen umfasst, in denen Brenngas und vorgewärmte Luft radial und im Gleichstrom vom Zentrum zur Peripherie strömen.
